# EUROPEAN PATENT APPLICATION

(11) **EP 2 079 259 A1**
(43) Date of publication of application: **15.07.2009**
(21) Application number: 08300001.8
(22) Date of filing: 02.01.2008
(51) Int. Cl.: H04W 16/00

(54) **Method of determining a location of a base station in a wireless communication network and base station in a wireless communication network**

(71) Applicant: Alcatel Lucent, 75008 Paris (FR)
(72) Inventor: Domschitz, Peter, 70191, Stuttgart (DE); Tabery, Peter, 80992, München (DE)
(74) Representative: Schneider, Sandra

(57) **Abstract**

The present invention relates to a method of determining a location of a base station (10) in a wireless communication network (100). The method comprises the step of using the environment (50) of the wireless communication network (100) local to the base station (10) to obtain location information of said base station (10). The invention further relates to a base station in a wireless communication network for performing said method.

## Description

### BACKGROUND OF THE INVENTION

The invention relates to a method of determining a location of a base station in a wireless communication network. The invention also relates to a base station in a wireless communication network adapted to perform location determination.

The invention relates to a method of determining a location of a base station in a wireless communication network. Such a base station is for example a femto base station. The femto base station is a scalable multi channel two-way communication device which goes beyond a typical base station by incorporating more of the major components of the telecommunications infra structure. One example of a femto base station is a UMTS access point base station containing a node B, RNC (Radio Network Controller) and GSN (GPRS support node) with a connection to the internet or an intranet. Application of voice-over-IP allows such a unit to provide voice and data services in the same way as a normal base station, but with more deployment simplicity. Other examples of femto base stations include Wi-Fi^{™} access points, CDMA 2000 access points or WiMAX (Worldwide Interoperability for Microwave Access) solutions.

Enabling base stations to determine their position is a general need in wireless communication networks. For example a base station antenna may be re-located or a base station transceiver may be repaired or replaced. For example also a base station can be logically moved when for example two physical base stations swap their identity and the two stations would appear to have swapped locations whereas neither base stations has physically moved. In the example of wireless local area networks there exists a significant number of base stations and deployment practises. Also the ease of moving the base station of a wireless local area network from one physical location to another makes it important to be able to locate the base station.

The location of a base station is also important for emergency calls arriving at the base station over wireless links from mobile units. In this case the location of the base station at which the emergency call arrives has to be known.

Another example for which the location of a base station has to be known is the deployment of femto base stations. Femto base stations work in a licence spectrum and are operated by a wireless operator. In general the wireless operator wants to prevent a third party, e. g. another company or a consumer, to place into uncontrolled operation a femto base station within his licensed spectrum. Neither uncontrolled re-allocation of his own femto base stations nor the deployment of base stations being part of another operator's network, actually not licensed for the location or spectrum used, can be accepted (in order to avoid misuse of spectrum owned by the operator and by that causing service degradation). The wireless operator is also forced to inhibit the disturbance of third party networks. In consequence the network operator responsible for the femto base station and frequency spectrum used needs to verify the location of the femto base station. He needs to check whether it is placed into operation by a third party within an area for which the operator actually has a licensed or illegally within a foreign operator's area.

This can for example be done by correlating the IP address of the femto base station with internet provider data e. g. by a "whois" query. This may be easily circumvented by the third party for example by establishing a VPN tunnel or using mobile IP. In the case of mobile IP the femto base station would use the correct home IP address although it would be physically located in another network.

### OBJECT OF THE INVENTION

The object of the invention is to provide a method of determining a location of a base station in a wireless communication network. Another object of the invention is to provide a base station in a wireless communication network adapted to perform location determination.

### SUMMARY OF THE INVENTION

These objects and other objects are solved by the features of the independent claims. The dependent claims comprise features of preferred embodiments of the invention.

The invention provides a method for determining a location of a base station in a wireless communication network using the environment of the wireless communication network local to the base station to obtain location information of said base station. The environment of the wireless communication network for this the base station obtains information about the environment of the wireless communication network local to it. The obtained information on the wireless environment of the wireless communication network is then used to obtain location information of the base station.

In a preferred embodiment of the invention it is checked if location information of the base station can be obtained by using the environment of the wireless communication network local to the base station and, if the check is positive, the environment of the wireless communication network local to the base station is used to obtain said location information of the base station in the wireless communication network. If the location information can be obtained using the environment of the wireless communication network local to the base station then it is used to obtain the location information.

In a further preferred embodiment of the invention the location of the base station can be verified by using at least one of GNSS positioning and IP address of the base station. GNSS positioning (global navigation satellite system) is for example the United States GPS, the Russian GLONASS or the European Galileo system currently being build, etc. The base station's position in geo coordinates as calculated from the GNSS signals my be sent to the network operator. The network operator may then check if this position is within his licensed area. The IP address may be correlated with Internet provider data to obtain a rough picture of where the base station is located. This GNSS and/or IP location information is preferably correlated and compared to the location information obtained by using the environment of the wireless communication network. By this an even more accurate location of the base station can be obtained.

In a further preferred embodiment of the invention optionally other radio information, e. g. pager signals, FM radio, RDS (Radio Data System), etc. could be analyzed for coarse location information of the base station. This additional radio information could be used to verify the other obtained location information, e. g. over the environment of the wireless communication network.

According to another preferred embodiment of the invention the local environment of the wireless communication network is analyzed by the base station receiving signals from other base stations and obtaining identification information of said other base stations. The base station is then able to deliver to e. g. the network operator the identifications of the other base stations that the base station is capable of receiving at its current location. It is also possible that these other base stations receive the base stations signals and forward them for example to the access gateway or any other central control entity of the operator's network.

According to another embodiment of the invention the environment of the wireless communication network local to the base station is used to obtain location information of the base station by analyzing hand-over procedures involving the base station. This embodiment is especially useful if a femto base station is deployed indoors at a location without reception of external signals, where e. g. neither reception of base station nor GNSS signals may be possible. Nevertheless the network operator may evaluate hand-over procedures and, e. g. in cooperation with other network operators may discover the location of the base station.

The inventive method of determining a location of a base station uses the environment of the wireless communication network local to the base station to obtain location information of the base station. This obtained location information of the base station may then for example be transmitted to an access gateway or any other central control entity of the operator's network. By transmitting said obtained location information to the operator of said base station, the operator can determine the location of the base station, and/or verify the location of the base station. For the example of the femto base station the network operator may for example use these tests to check if the femto base station is legal to operate at its current location with the current settings. The network operator may then disable the RF device of the base station if it is not permitted to operate with the current settings and/or at the current location. Cryptographic cookies as well as round trip time measurements may prevent replacement of base station identification messages and provide security as well.

For the example of a femto base station, of which it is known that the femto base station is at said one location, the configuration of the femto base station can be handed over to a trusted operator who owns spectrum licenses at the current location of the femto base station. This can be done if for example an operator can be positively identified. This enables a scenario in the world of roaming at base station level.

The invention also provides a base station in a wireless communication network which is adapted to perform location determination using the environment of the wireless communication network local to the base station. This base station can for example be a femto base station.

The inventive base station is adapted to perform the methods described above.

### BRIEF DESCRIPTION OF THE DRAWING

Other characteristics and advantages of the invention will become apparent in the following detailed description of a preferred embodiment of the invention illustrated by the accompanying drawing given by way of nonlimiting illustration.

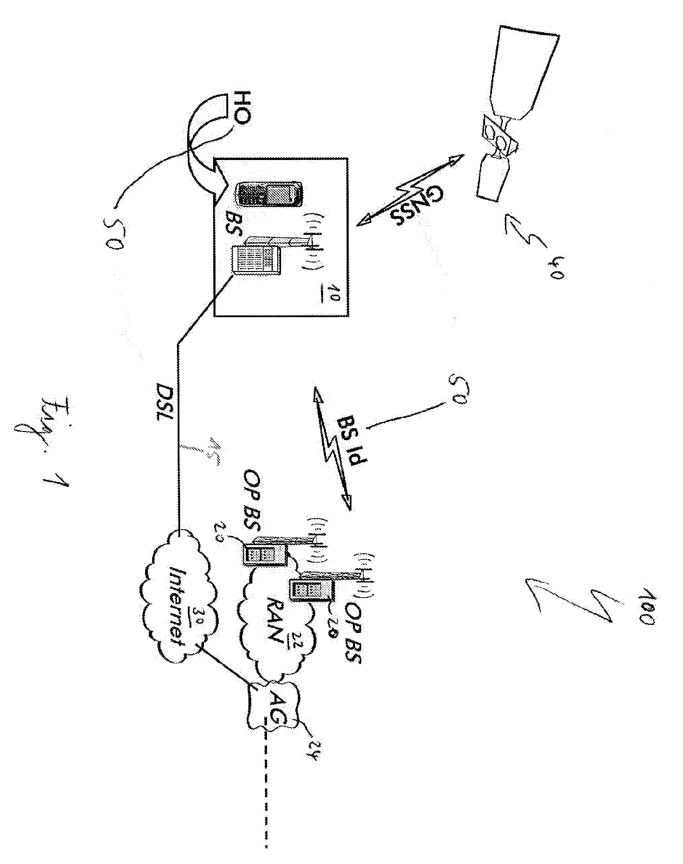

Figure 1 shows a schematic overview over a wireless communication network.

### DETAILED DESCRIPTION OF THE INVENTIONS

Shown in figure 1 is a schematic overview of an example of a wireless telecommunication network 100. The wireless communication network 100 comprises one femto base station 10 and two other base stations 20. In the example given in figure 1 the other base stations 20 are of the same operator as the femto base station 10.

The femto base station 10 shown in figure 1 is able to receive GNSS signals from satellites 40. The femto base station 10 is also able to receive and analyze hand-over information 50. The femto base station 10 is connected to the internet 30 over a DSL line 15. The femto base station 10 is able to receive base station identification information 50 from the other base stations 20. The other base stations 20 are base stations of a radio access network 22. The other base stations 20 are connected to an access gateway 24 of the operator of the wireless communication network. The femto base station 10 is connected to the access gateway 24 of the operator network over the internet 30.

For example the femto base station 10 may receive the base station identification 50 from neighboring base stations 20 that are under direct control of the mobile network operator. The femto base station 10 transmits this information over the DSL line 15 and the internet 30 to a central element of the operator's network. Said central element of the operator's network may for example be the network operator's access gateway 24 as shown in figure 1. The central element, e. g. the access gateway 24 then verifies that the information is accurate by evaluating the base station 10. There may be several indications that the claimed location is inaccurate. This may for example be a mismatch of the received base station identifications 50 with the operator's network map. This may for example be an unknown base station ID or base stations Ids 50 that are located too far apart in the network operator's map to be received at any given location simultaneously. It may also be that the femto base station's 10 IP address indicates the different location. This may be verified by correlating the IP address used by the femto base station 10 with coarse localization information available for most IP address domains as a first indication. This may be derived from the hierarchical IP address scheme. If there is an inconsistency this might be an indication that an IP tunnel is used from a remote location into another IP domain. Long round trip times for information that are received from femto base station 10 may indicate that the femto base station is located farther away as it pretends. It may also be detected that femto base station 10 is in a listening mode unable to receive any signal from other base stations 20 of the wireless operator. Or it may also be detected that a network operator's other base stations 20 cannot detect the femto base station active on the radio spectrum of the network operator even so according to the plans of the network operator there should be a femto base station 10 in active mode.

In the central node of the operator's network, e. g. the access gateway 24 a verification can be triggered, which is preferably cryptographically secured. The verification may be triggered for example by transmitting a cryptographic cookie to the other base stations 20 in the femto base stations 10 vicinity and expect the femto base station 10 to return this cookie within a certain time interval. Optionally, the femto base station 10 is notified beforehand in order to ensure that it is actually listening to the respective radio channel. Furthermore, requesting the femto base station 10 to cryptographically sign the cookie before returning it to the central entity, e. g. the access gateway 24 may ensure that the cookie is not processed by a different entity acting on behalf of the then presumably relocated base station. The cryptographic key must then be securely stored, e. g. on a smart card.

In another embodiment of the invention, the central entity of the operator''s network, e. g. the access gateway 24, requests the GNSS position from the femto base station 10 and checks whether the coordinates are within the legal coverage area of the operator's network as it is expected. This GNSS information is used in addition to the information obtained by using the local environment of the base station of the wireless communication network.

In another embodiment of the invention the network operator activates the femto base station 10 tentatively and listens for handovers 50 of user terminals. The handovers are then evaluated and the geographic distance between the operator's other base stations 20 and the femto base station 10 is evaluated. In case the femto base station 10 does not allow handovers 50, the history of user terminals connecting via femto base station 10 can be looked up in the HLR/HSS (Home Location Register / Home Subscriber Server) and checked for plausibility. If the last verified location of a user terminal is too far away from the claimed location of the femto base station 10, this may be seen as an indication for a clandestine relocation of the femto base station 10.

Several of the above mentioned methods may be used and correlated in order to increase the reliability of the position identification of the base station 10.

## Claims

1. Method of determining a location of a base station (10) in a wireless communication network (100), comprising the step of
using the environment (50) of the wireless communication network (100) local to the base station (10) to obtain location information of said base station (10).

2. Method according to claim 1, **characterized by**
further comprising the steps of
checking if location information of said base station (10) can be obtained by using the environment (50) of the wireless communication network (100) local to the base station(10), and
using the environment (50) of the wireless communication network (100) local to the base station (10) to obtain said location information, if the outcome of said check is positive.

3. Method according to claim 1 or 2, **characterized by**
using at least one of GNSS positioning and IP address of said base station (10) to obtain location information of said base station (10).

4. Method according to one of the previous claims, **characterized in that** using the environment (50) of the wireless communication network (100) local to the base station (10) comprises analysing handover (HO) procedures involving the base station (10).

5. Method according to one of the previous claims, **characterized in that** using the environment (50 of the wireless communication network (100) local to the base station (10) comprises receiving signals from other base stations (20) and obtaining identification information (BS Id) of said other base stations (20).

6. Method according to one of the previous claims, further comprising the step of
transmitting said obtained location information to the operator of said base station (10).

7. Method according to one of the previous claims, further **characterized by** the base station (10) being a femto base station.

8. Base station (10) in a wireless communication network (100), adapted to perform location determination using the environment (50) of the wireless communication network (100) local to the base station(10).

9. Base station (10) according to claim 8, **characterized in that** the base station (10) is a femto base station.
